(19) Europäisches Patentamt
European Patent Office
Office européen des brevets

(11) **EP 4 080 402 B1**

(12) **EUROPÄISCHE PATENTSCHRIFT**

(45) Veröffentlichungstag und Bekanntmachung des Hinweises auf die Patenterteilung:
**10.07.2024 Patentblatt 2024/28**

(21) Anmeldenummer: **22161520.6**

(22) Anmeldetag: **11.03.2022**

(51) Internationale Patentklassifikation (IPC):
*G06K 7/10* (2006.01)     *H04N 1/401* (2006.01)
*H04N 1/407* (2006.01)

(52) Gemeinsame Patentklassifikation (CPC):
**H04N 1/401; G06K 7/10732; H04N 1/407**

(54) **HELLIGKEITS- UND FARBKORREKTUR VON BILDDATEN EINER ZEILENKAMERA**

BRIGHTNESS AND COLOUR CORRECTION OF IMAGE DATA OF A LINE SCAN CAMERA

CORRECTION DE LUMINOSITÉ ET DE COULEURS DES DONNÉES D'IMAGE D'UNE CAMÉRA À BALAYAGE LINÉAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.04.2021 DE 102021110388**

(43) Veröffentlichungstag der Anmeldung:
**26.10.2022 Patentblatt 2022/43**

(73) Patentinhaber: **SICK AG**
**79183 Waldkirch (DE)**

(72) Erfinder:
• **Müller, Romain**
**79252 Stegen (DE)**
• **Pfeifer, Marcel**
**79104 Freiburg (DE)**

(56) Entgegenhaltungen:
**DE-A1- 10 200 652     DE-U1- 202019 106 363
US-A1- 2015 138 611**

## Beschreibung

Die Erfindung betrifft ein Verfahren zur Helligkeits- und Farbkorrektur von Bilddaten einer Zeilenkamera nach dem Oberbegriff von Anspruch 1 sowie eine Kamera, die dieses Verfahren anwendet.

Die Bilddaten einer Zeilenkamera werden in vielen industriellen und logistischen Anwendungen genutzt. Damit können verschiedene Vorgänge automatisiert werden. Neben diversen Mess-, Manipulations- und Prüfaufgaben ist das automatische Sortieren von Objekten anhand von Codes bekannt, die mit Hilfe der Bilddaten gelesen werden. Dazu werden Barcodes und verschiedene zweidimensionale Codes gelesen, wie ein Maxicode oder ein Aztec-Code, oder auch Beschriftungen, die mit einer Texterkennung (OCR) dekodiert werden.

In einer typischen Anwendungssituation, etwa an einem Fertigungsband, bei einer Gepäckabfertigung in Flughäfen oder der automatisierten Sortierung von Paketen in Logistikzentren, werden die Objekte an der Kamera vorbei gefördert und Bilddaten der Objekte mit den darauf angeordneten Codes durch zeilenweise Abtastung gewonnen. Die einzelnen Bildzeilen werden anhand der bekannten oder gemessenen Bandgeschwindigkeit zusammengesetzt. Zeilenkameras erreichen eine hohe Auflösung und Geschwindigkeit.

Häufig nehmen herkömmliche Zeilenkameras ein monochromes Bild auf, das auch als Grauwertbild oder Schwarz-Weiß-Bild bezeichnet wird. Damit wird die beste Photonenausbeute und daher das beste Signal-Rausch-Verhältnis erreicht, und Farberfassung ist für viele Auswertungen einschließlich dem Lesen von Codes, die ohnehin nur helle und dunkle Bereiche aufweisen, nicht interessant. Sollen doch Farbinformationen gewonnen werden, so wird in der Regel auf Matrixkameras zurückgegriffen. Gerade bei schnellen Bandapplikationen hat das aber Nachteile, da eine hohe Framerate benötigt wird und das Zusammenfügen von deren Einzelbildern (Stitching) im Gegensatz zum einfachen Aneinanderreihen von Bildzeilen sehr rechenaufwändig wird. Außerdem kann ein Matrixbildsensor in Zeilenrichtung nicht dieselbe Pixelanzahl erreichen wie ein Zeilenbildsensor.

Die verbreitetste Art, einen Matrixbildsensor zur Farbgewinnung auszubilden, ist das pixelweise Vorsehen von jeweils zwei grünen, einem roten und einem blauen Filter in einem Bayer-Pattern. Es gibt jedoch auch alternative Farbmuster, die beispielsweise einen Weißkanal hinzufügen (RGBW) oder subtraktive Grundfarben verwenden, etwa rot, gelb und blau (RYBY).

Auch Farbzeilenkameras sind bekannt. Sie besitzen beispielsweise drei Zeilen in rot, grün und blau (RGB), eine alternierende Anordnung dieser Grundfarben auf einer einzigen Zeile oder in Nachahmung des Bayer-Patterns eine Zeile mit alternierenden roten und blauen Pixeln und eine zweite rein grüne Zeile. Nachteilig an allen diesen Farbbildsensoren ist, dass durch die Farbfilter Empfangslicht verloren geht und daher ein Schwarz-Weiß-Bild für Anwendungen wie das Codelesen mit höheren Ansprüchen an die Auflösung überlegen bleibt. Die Farbinformation kann also nur um den Preis einer schlechteren Leistung bezüglich der Schwarz-Weiß-Auswertung gewonnen werden.

Ferner unterliegt eine Zeilenkamera in ihrer Anwendungssituation einer Dynamikvariation. Abhängigkeiten vom Umgebungslicht werden durch eine aktive Beleuchtung und erforderlichenfalls eine Abschirmung weitgehend eliminiert. Die Beleuchtung selbst und die Bildaufnahme sind aber immer noch von Objekt zu Objekt variabel. Dazu tragen vor allem der jeweilige Objektabstand und Inhomogenitäten wie Randlichtabfälle in der Zeilenrichtung bei. Es ist bekannt, eine integrierte Beleuchtung zu vermessen und die Helligkeitsdynamiken vor Ort einzulernen, um diese zu kompensieren. Das führt aber zu einem hohen Kalibrationsaufwand. Außerdem sind die Helligkeitsdynamiken und ungleichmäßige spektrale Eigenschaften der Beleuchtung bei einer Farbaufnahme noch viel störender, weil sich dadurch die aufgenommenen Farben verschieben, was aber bisher nicht kompensiert wird.

Die DE 10 2015 116 568 A1 beschreibt eine Farberfassung durch die Kombination einer monochromen Kamera mit einem durchstimmbaren Farbfilter. Dadurch geht jedoch zu viel Aufnahmezeit verloren, und gegenüber einer monochromen Kamera fehlt wegen der Farbfilter Empfangspegel.

In der EP 3 012 778 A2 ist eine Doppelzeilenkamera beschrieben, die mit einer multispektralen Beleuchtung betrieben wird. Das ist effektiv auch nichts anderes als ein Farbfilter, der nun an anderer Stelle erzeugt wird, aber nicht den Zeit- und Lichtverlust verhindert.

Aus der US 2010/0316291 A1 und der US 2012/0002066 A1 ist jeweils ein codelesendes Gerät bekannt, das Bilder mit einer Pixelmatrix aufnimmt. Die meisten Pixel sind monochrom, in einer Gitteranordnung sind farbige Pixel eingestreut. Diese farbigen Pixel bilden ein Bayer-Pattern.

Die DE 20 2019 106 363 U1 offenbart einen Codeleser zum Lesen von optischen Codes, der mindestens eine Doppelzeile als Bildsensor verwendet, von denen Empfangspixel mindestens einer Zeile für weißes Licht und Empfangspixel der übrigen Zeile für nur eine Farbe empfindlich sind. Damit lassen sich dann ein Grauwertbild und ein Farbbild aufnehmen. In einigen Ausführungsformen wird eine Grundfarbe aus dem Grauwertbild und zwei anderen Grundfarben rekonstruiert. Allerdings ist dabei die Farbkorrektur unvollständig, das Farbbild zeigt noch merkliche Farbabweichungen.

Aus der DE 102 00 652 A1 ist ein Optikbildscanner mit Farb- und Intensitätskompensation während einer Lampenaufwärmung bekannt. Dabei überwacht ein Array aus Photosensoren, das zusätzlich zu den eigentlichen scannenden Photosensoren vorgesehen ist, die Lampe und einen Kalibrierungsstreifen, und dessen Daten werden zum Kompensieren der Abtastlinien verwendet.

Es ist daher Aufgabe der Erfindung, die Aufnahme farbiger Bilddaten zu verbessern.

Diese Aufgabe wird durch ein Verfahren zur Helligkeits- und Farbkorrektur von Bilddaten einer Zeilenkamera nach Anspruch 1 sowie eine Kamera gemäß Anspruch 15 gelöst, die dieses Verfahren anwendet. Die Zeilenkamera weist einen zeilenförmigen Bildsensor mit mehreren Zeilenanordnungen von Lichtempfangspixeln auf. Mit mehreren Zeilenanordnungen ist eine geringe Anzahl jedenfalls kleiner zehn gemeint, die Auflösung in Zeilenrichtung und damit die Anzahl Lichtempfangspixel in Zeilenrichtung ist um Größenordnungen höher und beträgt mehrere hundert, tausend oder mehr. Während ein Beleuchtungsmodul einen Erfassungsbereich der Zeilenkamera ausleuchtet, werden ein Grauwertbild und mindestens zwei Einfarbbilder aufgenommen. Ein Einfarbbild ist ein Bild einer bestimmten Farbe, beispielsweise blau oder rot. Dafür haben die Lichtempfangspixel unterschiedliche spektrale Empfindlichkeiten, insbesondere durch Farbfilter beziehungsweise das Weglassen davon. Gruppen von Lichtempfangspixeln mit einer bestimmten spektralen Empfindlichkeit können jeweils als Teil eines Aufnahmekanals aufgefasst werden, eines Monokanals für das Grauwertbild und mehrerer Farbkanäle für die Einfarbbilder.

Die Bilddaten werden mit einer Helligkeitsfunktion des Beleuchtungsmoduls korrigiert. Die Helligkeitsfunktion hängt von bis zu zwei Variablen ab, von der beispielsweise mit X bezeichneten Zeilenrichtung längs einer Zeilenanordnung oder von der beispielsweise mit Z bezeichneten Abstandsrichtung der aufgenommenen Objekte oder besonders bevorzugt von beidem. In diskretisierter Form kann die Helligkeitsfunktion durch einen Helligkeitsvektor beziehungsweise eine Helligkeitsmatrix repräsentiert werden. Die Helligkeitsfunktion kann unmittelbar zur Korrektur verwendet werden, oder sie fließt in komplexere Korrekturen ein, die nachfolgend noch anhand von vorteilhaften Ausführungsformen beschrieben werden.

Die Erfindung geht von dem Grundgedanken aus, die Helligkeitsfunktion vorab beispielsweise in der Endfertigung für das Beleuchtungsmodul zu bestimmen und in dem Beleuchtungsmodul zu speichern. Das kann noch völlig unabhängig von der Zeilenkamera geschehen, eine Verbindung zwischen einer bestimmten Zeilenkamera und dem Beleuchtungsmodul ist zu diesem Zeitpunkt vorzugsweise noch gar nicht bekannt. Später im Betrieb wird dann von der Zeilenkamera, mit der zusammen das Beleuchtungsmodul im Einsatz ist, die Helligkeitsfunktion aus dem Beleuchtungsmodul ausgelesen, und die Zeilenkamera verwendet sie direkt für die Helligkeits- und Farbkorrektur, oder die Zeilenkamera erzeugt aus der in dem Beleuchtungsmodul abgelegten Helligkeitsfunktion eine eigene Korrekturfunktion und verwendet diese im weiteren Betrieb. Die Helligkeitsfunktion wird jeweils im Monokanal und den Farbkanälen für eine Korrektur verwendet, d.h. auf das Grauwertbild und die Einfarbbilder. Eine Helligkeitskorrektur in einem Farbkanal ist automatisch auch eine Farbkorrektur, da sie die gegenseitige Gewichtung der Farben verschiebt. In weiteren vorteilhaften Ausführungsformen wird der Monokanal für eine Rekonstruktion von Farben einbezogen, so dass auch dessen Helligkeit Einfluss auf die Farbe bekommt. Es können zusätzliche vorteilhafte Farbkorrekturen hinzukommen, die ebenfalls noch erläutert werden.

Die Erfindung hat den Vorteil, dass ein Grauwertbild oder Schwarz-Weiß-Bild in voller Auflösung bei hohen Kontrasten und bestmöglichem Signal-Rausch-Verhältnis erfasst wird. Zugleich wird eine Farbinformation gewonnen, die für verschiedene zusätzliche oder alternative Auswertungen verwendet werden kann. Diese zusätzliche Farberfassung geht nicht zulasten der Auflösung oder des Signal-Rausch-Verhältnisses in dem Grauwertbild. Es ist erfindungsgemäß möglich, das Beleuchtungsspektrum des Beleuchtungsmoduls zu kompensieren. Das Beleuchtungsmodul ist dabei zunächst unabhängig von der Kamera und kann eigenständig kalibriert werden. Das erleichtert Inbetriebnahme oder Wartung, denn die Kamera adaptiert sich an das mit ihr verwendete Beleuchtungsmodul. Vor Ort muss kein Einlernen der Beleuchtungscharakteristik vorgenommen werden, das mit einigem Aufwand und Expertenwissen verbunden ist.

Die Verteilung der Lichtempfangspixel mit ihrer jeweiligen farbselektiven Lichtempfindlichkeit über die Zeilenanordnungen der Zeilenkamera variiert je nach Ausführungsform.

Vorzugsweise bilden die Lichtempfangspixel des Monokanals für das Grauwertbild mindestens eine vollständige Zeile, die als weiße Zeile bezeichnet werden kann. Diese Lichtempfangspixel sind für weißes Licht empfindlich, was bedeuten soll, dass sie das ganze optische Spektrum wahrnehmen und beispielsweise keine Farbfilter aufweisen. Die Grenze des empfangenen Lichts bilden natürlich die unvermeidbaren Hardwarebeschränkungen der verwendeten Kamerapixel. Die Verteilung der Lichtempfangspixel eines Farbkanals und damit die Aufnahme eines jeweiligen Einfarbbildes mit Empfindlichkeit für nur eine Farbe kann verschiedene Muster bilden, dies unterscheidet sich je nach Ausführungsform. Zeilenanordnungen für die Farbkanäle können als Gegenbegriff zu der weißen Zeile als farbige Zeile bezeichnet werden. Prinzipiell könnten in eine farbige Zeile nochmals weiße Pixel eingestreut sein, aber für solche Bildinformationen ist an sich die weiße Zeile zuständig.

Bevorzugt sind zwei, drei oder vier Zeilenanordnungen vorgesehen, von denen ein oder zwei Zeilenanordnungen weiße Zeilen sind. Die genannten Zahlen sind hier genaue Angaben, keine Mindestangaben. Mit wenigen Zeilenanordnungen wird ein besonders kompakter Aufbau des Bildsensors erreicht. Die minimale Ausführungsform ist eine Doppelzeile mit einer weißen und einer farbigen Zeile, wobei dann die farbige Zeile durch ein Muster von Lichtempfangspixeln mit jeweiliger Empfindlichkeit für eine von mindestens zwei unterschiedlichen Farben mindestens zwei Farbkanäle unterstützt. Um eine höhere Auflösung des Farbbildes in Zeilenrichtung zu erreichen, sind bevorzugt zumindest zwei farbige Zeilen vorgesehen.

Die Lichtempfangspixel innerhalb einer farbigen Zeile sind bevorzugt für dieselbe Farbe empfindlich. Mit anderen Worten ist eine ganze farbige Zeile einheitlich, beispielsweise eine rote Zeile oder eine blaue Zeile. Damit wird die entsprechende Farbinformation in voller Auflösung erfasst. Die Lichtempfangspixel innerhalb einer farbigen Zeile können auch für unterschiedliche Farben empfindlich sein, insbesondere in alternierender Reihenfolge wie rot-blau-rot-blau. Weiterhin ist denkbar, einheitlich farbige Zeilen und gemischt farbige Zeilen miteinander zu kombinieren.

Das Grauwertbild wird bevorzugt zum Lesen von Codes verwendet, d.h. es wird der in dem Code codierte Inhalt ausgelesen. Das Grauwertbild hat die volle Auflösung und das bestmögliche Signal-Rauschverhältnis, so dass Codelesen mit gleicher Qualität möglich ist wie mit einer herkömmlichen monochromen Zeilenkamera. Zugleich können Farbinformationen geliefert werden, ohne das Decodierergebnis zu beeinträchtigen. Diese Farbinformationen können für beliebige, aber auch für mit dem Codelesen verbundene Funktionen genutzt werden, beispielsweise ein anfängliches Segmentieren beziehungsweise Auffinden von Codebereichen.

Aus den Einfarbbildern wird vorzugsweise ein Farbbild erzeugt. Ein Farbbild ist ein Bild im üblichen Sprachgebrauch mit für das menschliche Auge wie üblich erkennbaren Farben etwa in RGB und von einem Einfarbbild zu unterscheiden, das beispielsweise nur die rote Farbinformation enthält. Sind alle Grundfarben als Einfarbbilder erfasst, genügt es, diese zu dem Farbbild zusammenzufassen. Ansonsten ist denkbar, eine der Grundfarben aus den anderen zu rekonstruieren. Besonders bevorzugt wird das Farbbild im Zusammenhang mit Codelesen und zu dessen Unterstützung verwendet, um codetragende Objekte und/oder Codebereiche zu erkennen, zu klassifizieren und/oder vom Bildhintergrund zu unterscheiden. Häufig unterscheidet sich der Untergrund des Codes farblich von der Umgebung, oder die Farbinformation kann dafür verwendet werden, ein codetragendes Objekt zu erkennen und vom Hintergrund zu trennen. Alternativ wird das Farbbild für irgendeine andere Funktion genutzt, insbesondere als solches ausgegeben und erst nachgelagert verwendet, sei es für Visualisierungs- und Diagnosefunktionen oder ganz andere Zusatzaufgaben. So werden die beiden Funktionen Aufnahme eines für Codelesen besonders geeigneten Grauwertebildes und eines für unterstützende oder andere Zwecke nutzbaren Farbbildes in einem Verfahren und einer Vorrichtung vereinigt, wobei die Primärfunktion Codelesen durch die zusätzliche Farbbildaufnahme nicht beeinträchtigt wird. Das Grauwertbild kann ergänzend oder alternativ für andere Zwecke genutzt werden als für ein Codelesen.

Es wird vorzugsweise ein Grauwertbild und ein Farbbild erzeugt. Damit sind beide Bilder für das Decodieren oder sonstige Funktionen verfügbar. Das Farbbild weist bevorzugt eine geringere Auflösung auf als das Graubild. Für im Hinblick auf Auflösung anspruchsvolle Auswertungen wie Codelesen steht bereits das hochaufgelöste Grauwertbild der weißen Zeile zur Verfügung. Die geringere Auflösung kann bereits originär durch weniger oder größere Lichtempfangspixel einer jeweiligen Farbe in Zeilenrichtung entstehen. Alternativ findet ein Binning oder Downsampling auf Hardwareebene oder Softwareebene statt.

Vorzugsweise werden während einer Relativbewegung zwischen Zeilenkamera und aufzunehmenden Objekten beziehungsweise Codes aufgenommene Bildzeilen zu einem Gesamtbild zusammengesetzt. Bei Barcodes ist alternativ ein Codelesen aus einer einzigen zeilenförmigen Aufnahme denkbar, aber vorzugsweise werden auch Barcodes aus einem derart zusammengesetzten, flächigen Gesamtbild gelesen.

Die Helligkeitsfunktion wird bevorzugt jeweils mittels einer Farbnormierungsfunktion für die Farbe des Einfarbbildes modifiziert, so dass die Korrektur für das Grauwertbild und die Einfarbbilder jeweils mit einer eigenen Helligkeitsfunktion vorgenommen wird, wobei eine Farbnormierungsfunktion für verschiedene Zeilenpositionen und Abstände die Helligkeit des Beleuchtungsmoduls in ihrer Farbe ins Verhältnis zur Helligkeit über das ganze Spektrum setzt. Die Farbnormierungsfunktion gibt vorzugsweise in den gleichen Dimensionen Zeilenrichtung X und/oder Abstandsrichtung Z wie die Helligkeitsfunktion die spektralen Unterschiede des Beleuchtungsmoduls wieder. In diskretisierter Form lässt sich die Farbnormierungsfunktion als Matrix oder Vektor repräsentieren. Die Auflösung von Farbnormierungsfunktion und Helligkeitsfunktion kann unterschiedlich sein, dies ist dann beispielsweise durch Interpolation anpassbar. Werden Farbnormierungsfunktion und Helligkeitsfunktion pro Farbkanal gemischt, so ergibt sich eine farbangepasste und normierte verbesserte oder modifizierte Helligkeitsfunktion. Die Helligkeitsfunktion für den Monokanal beziehungsweise das Grauwertbild bedarf keiner Normierung, eine entsprechende Graunormierungsfunktion würde nur aus Einsen bestehen und nichts ändern, da hier der Grauwert für die Helligkeit über das ganze Spektrum auf sich selbst bezogen würde. Die Modifikation der Helligkeitsfunktion mit den Farbnormierungsfunktionen erfolgt vorzugsweise während der Inbetriebnahme, nachdem die Kamera die Helligkeitsfunktion aus dem Beleuchtungsmodul ausgelesen hat, und danach wird die modifizierte Helligkeitsfunktion für die Verwendung zur Helligkeits- und Farbkorrektur im weiteren Betrieb in der Zeilenkamera gespeichert.

Die Farbnormierungsfunktion ist bevorzugt vorab allgemein für den Typ des Beleuchtungsmoduls bestimmt. In dieser Ausführungsform wird davon ausgegangen, dass die verwendete Baureihe oder der Typ des Beleuchtungsmoduls über Geräte hinweg ein jedenfalls einigermaßen stabiles spektrales Verhalten zeigt. Die Farbnormierungsfunktionen werden einmalig bestimmt, nicht je Beleuchtungsmodul. Abweichungen werden als Toleranzen hingenommen. Diese Farbnormierungsfunktionen können wahlweise im Beleuchtungsmodul oder in der Zeilenkamera hinterlegt werden, da sie von dem konkreten Beleuchtungsmodul nicht abhängen, sondern nur von dessen Typ.

Die Farbnormierungsfunktionen werden bevorzugt vorab individuell für das Beleuchtungsmodul bestimmt. In dieser alternativen Ausführungsform sind die Farbnormierungsfunktionen ebenso geräteindividuell wie die Helligkeitsfunktion und werden ebenfalls für die spätere Verwendung in der Zeilenkamera in dem Beleuchtungsmodul gespeichert. Vorzugsweise werden Farbnormierungsfunktionen und Helligkeitsfunktion im selben Vorgang eingelernt, beispielsweise durch Verwendung farbsensitiver Lichtempfänger während der Kalibrierungsmessung der Helligkeitsfunktion in verschiedenen X- und/oder Z-Richtungen.

Die Helligkeitsfunktion wird bevorzugt anhand optischer Parameter der Zeilenkamera verfeinert. Die in dem Beleuchtungsmodul abgelegte Helligkeitsfunktion hat vorzugsweise nur eine geringe Auflösung von beispielsweise um die zehn Werte in X- und/oder Z-Richtung. Das reduziert den Aufwand bei der Kalibrierung des Beleuchtungsmoduls, wenn dort anfangs die Helligkeitsfunktion gespeichert werden soll. Die Zeilenkamera liest später am Betriebsort diese noch recht grob aufgelöste Helligkeitsfunktion ein und wandelt sie unter Verwendung eines Optikmodells, in das optische Parameterwie Brennweite, Blende und dergleichen eingehen, in eine höher aufgelöste Helligkeitsfunktion. Vorzugsweise wird zuerst die Helligkeitsfunktion mit den Farbnormierungsfunktionen gemischt, um je Mono- und Farbkanal eine Helligkeitsfunktion zu erhalten, und diese je Kanal erhaltene Helligkeitsfunktion wird anschließend verfeinert. Da die Helligkeitsfunktionen dann bereits normiert sind, kann im Monokanal und in den Farbkanälen derselbe Algorithmus zur Verfeinerung verwendet werden. Es ist aber auch denkbar, in den Farbkanälen einen für Farbe an sich oder sogar jede Farbe adaptierten Algorithmus zur Verfeinerung zu verwenden.

Das Grauwertbild und die Einfarbbilder werden vorzugsweise mit unterschiedlichen analogen und/oder digitalen Verstärkungen aufgenommen. Wegen der Farbfilter ist der Pegel in den Farbkanälen typischerweise geringer, und dies kann durch eine Verstärkung ausgeglichen werden. Dabei können alle Farben mit demselben Verstärkungsfaktor angehoben oder auch untereinander unterschiedlich verstärkt werden. Sofern die Hardware es zulässt, wird durch analoge Verstärkung die beste Signalqualität erreicht. Eine digitale Verstärkung kann durch punkweises Skalieren mit dem gewünschten Verstärkungsfaktor in der Helligkeitsfunktion beziehungsweise Farbnormierungsfunktion berücksichtigt werden.

Es werden vorzugsweise zwei Einfarbbilder in zwei von drei Grundfarben aufgenommen. Es gibt hier einen Monokanal und zwei Farbkanäle jeweils einer unterschiedlichen Grundfarbe. Dementsprechend weisen die farbigen Zeilen der Zeilenkamera Lichtempfangspixel auf, die für jeweils eine von zwei Grundfarben empfindlich sind, und keine Lichtempfangspixel, die für die dritte Grundfarbe empfindlich sind. Grundfarben sind die additiven Grundfarben rot, grün und blau beziehungsweise die subtraktiven Grundfarben blaugrün (cyan), purpur (magenta) und gelb. Indem nur zwei davon vorgesehen sind, werden Lichtempfangspixel und Zeilenanordnungen eingespart. Alternativ wäre denkbar, dass alle drei jeweiligen Grundfarben vorhanden sind (RGBW, CMYW).

Die dritte Grundfarbe wird bevorzugt aus dem Grauwertbild und den beiden Einfarbbildern rekonstruiert. Die weiße Zeile nimmt eine Überlagerung aller Grundfarben auf, so dass die dritte Grundfarbe isoliert werden kann, wenn die beiden anderen Grundfarben aufgenommen werden. Allerdings würden bei naivem direktem Subtrahieren insbesondere bei inhomogenem Spektrum des Beleuchtungsmoduls die Farben unkenntlich verfälscht. Erfindungsgemäß bleiben aber die Farben dank der erläuterten Korrektur mit der Helligkeitsfunktion vorzugsweise unter Berücksichtigung von Farbnormierungsfunktionen erhalten. Eine zusätzliche vorteilhafte Farbkorrektur wird nachfolgend noch erläutert.

Die beiden Grundfarben sind vorzugsweise rot und blau. Allgemein führen additive Grundfarben zu besseren Ergebnissen. Gerade das im Bayer-Pattern doppelt vorgesehene grün wird in dieser bevorzugten Ausführungsform nicht aufgenommen, so dass hierfür keine Lichtempfangspixel und Zeilenanordnungen vorgesehen sein müssen. Bei Bedarf wird grün aus der weißen Zeile und den roten und blauen Farbinformationen erzeugt. Anschaulich wird damit grün aus $G = 3*W-R-B$ rekonstruiert, wobei das erst mit der erfindungsgemäßen Helligkeits- und Farbkorrektur zu befriedigenden Ergebnissen führt. Die Auswahl der Grundfarben rot und blau ist besonders vorteilhaft, wenn das Beleuchtungsmodul eine schwächere Intensität im grünen Spektrum aufweist.

Vorzugsweise werden korrigierte Farbwerte eines Farbbildes aus Linearkombinationen jeweiliger Grauwerte des Grauwertbildes und Einfarbwerte der Einfarbbilder mit farbkorrigierenden Gewichtungsfaktoren gebildet. Die Gewichtungsfaktoren sind statisch und werden empirisch bestimmt, um mit dieser zusätzlichen Farbkorrektur einen guten Farbeindruck zu erzielen. In diesem speziellen Zusammenhang wird auch die mit der weißen Zeile erfasste Bildinformation als Farbe betrachtet, wird also ebenfalls in die Linearkombinationen einbezogen, falls eine Grundfarbe aus der weißen Zeile beziehungsweise dem Grauwertbild rekonstruiert wird.

Bevorzugt werden korrigierte RGB-Werte R'G'B' zu einem Grauwertbild mit Grauwerten W, einem Rotbild mit Rotwerten R und einem Blaubild mit Blauwerten B zu

$$R'=x_1*R+x_2*(3*W-R-B)+x_3*B+x_4,$$

$$G'=x_5*R+x_6*(3*W-R-B)+x_7*B+x_8$$

und

$$B'=x_9*R+x_{10}*(3*W-R-B)+x_{11}*B+x_{12}$$

mit Gewichtungsfaktoren $x_1...x_{12}$ gebildet. Das ist eine einfache und klare Rechenvorschrift, deren überschaubare Anzahl Gewichtungsfaktoren $x_1...x_{12}$ zugleich mit vertretbarem Aufwand bestimmt und flexibel genug für eine gute Farbkorrektur ist. Hier wird wiederum das bevorzugte Paar Einfarbbilder in rot und blau aufgenommen. Bei anderen Grundfarben ließen sich die obigen Gleichungen analog durch Ersetzungen angeben. Einzelne oder einige der Gewichtungsfaktoren können Null betragen, insbesondere die Offsets $x_4$, $x_8$, $x_{12}$.

Die korrigierten Farbwerte werden vorzugsweise mit einem neuronalen Netz bestimmt. Dann müssen keine Gewichtungsfaktoren von Hand bestimmt werden, sondern dies wird automatisch anhand von Beispieldaten gelernt. Die erforderlichen Datensätze mit den als richtig einzulernenden Farbvorgaben können über Referenzmuster vorgegeben werden. Besonders bevorzugt erfolgt das Training anhand von Farbbildern mindestens eines weiteren farbsensitiven oder vorzugsweise farbkalibrierten Sensors. Der zusätzliche Farbensensor wird nur einmalig beispielsweise am Herstellungsort benötigt, so dass dessen Einmalkosten nicht stark ins Gewicht fallen, und erzeugt auf einfache Weise gelabelte Trainingsdaten in der erforderlichen Qualität und Quantität.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1     eine schematische Schnittdarstellung einer Zeilenkamera;

Fig. 2     eine dreidimensionale Ansicht einer Anwendung der Zeilenkamera in fester Montage über einem Förderband mit Objekten, insbesondere zum Codelesen;

Fig. 3     eine schematische Darstellung eines zeilenförmigen Bildsensors mit einer roten, einer blauen und einer weißen Zeile;

Fig. 4     eine schematische Darstellung eines zeilenförmigen Bildsensors mit einer roten, einer blauen und zwei weißen Zeilen;

Fig. 5     eine schematische Darstellung eines zeilenförmigen Bildsensors mit einer alternierend rot-blauen und einer weißen Zeile;

Fig. 6     eine schematische Darstellung eines zeilenförmigen Bildsensors mit zwei alternierend rot-blauen und zwei weißen Zeilen;

Fig. 7     ein beispielhaftes Ablaufschema zur Erzeugung von normierten Grauwert- und Einfarbbildern;

Fig. 8     eine beispielhafte Farbnormierungsmatrix für rot;

Fig. 9     eine beispielhafte Farbnormierungsmatrix für blau;

Fig. 10    Beispielbilder bei verschiedenen Abständen vor und nach der Normierung für den Monokanal des Grauwertbildes;

Fig. 11    Beispielbilder bei verschiedenen Abständen vor und nach der Normierung für den roten Farbkanal des Rotbildes;

Fig. 12    Beispielbilder bei verschiedenen Abständen vor und nach der Normierung für den blauen Farbkanal des Blaubildes;

Fig. 13    ein beispielhaftes Spektrum eines Beleuchtungsmoduls bei verschiedenen Abständen; und

Fig. 14    eine beispielhafte Darstellung der Quanteneffizienz von Lichtempfangspixeln für verschiedene Farben.

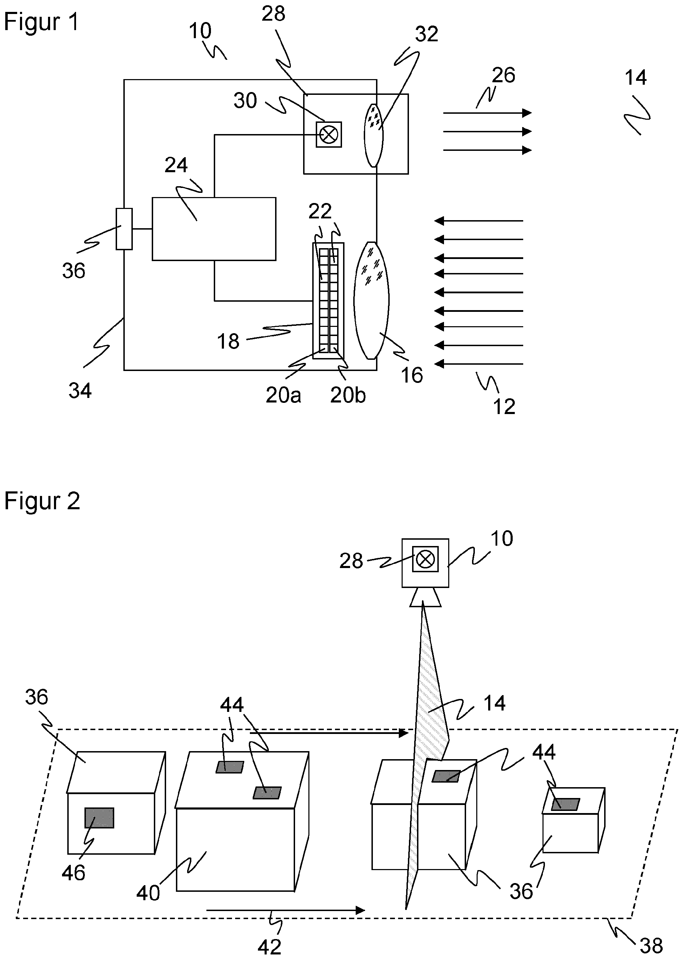

Figur 1 zeigt eine sehr vereinfachte Blockdarstellung einer Zeilenkamera 10, die vorzugsweise als Codeleser zum Lesen von ein- oder zweidimensionalen optischen Codes ausgebildet ist. Die Zeilenkamera 10 erfasst Empfangslicht 12 aus einem Erfassungsbereich 14 durch ein Aufnahmeobjektiv 16, das hier nur durch eine einfache Linse repräsentiert ist. Ein zeilenförmiger Bildsensor 18 erzeugt Bilddaten des Erfassungsbereichs 14 und der dort gegebenenfalls vorhandenen Objekte und Codebereiche. Der Bildsensor 18 weist zumindest zwei Zeilen 20a-b von lichtempfindlichen Empfangspixeln 22 auf, wobei in Zeilenrichtung vorzugsweise eine Vielzahl von hunderten, tausenden oder noch mehr Empfangspixeln 22 vorgesehen sind.

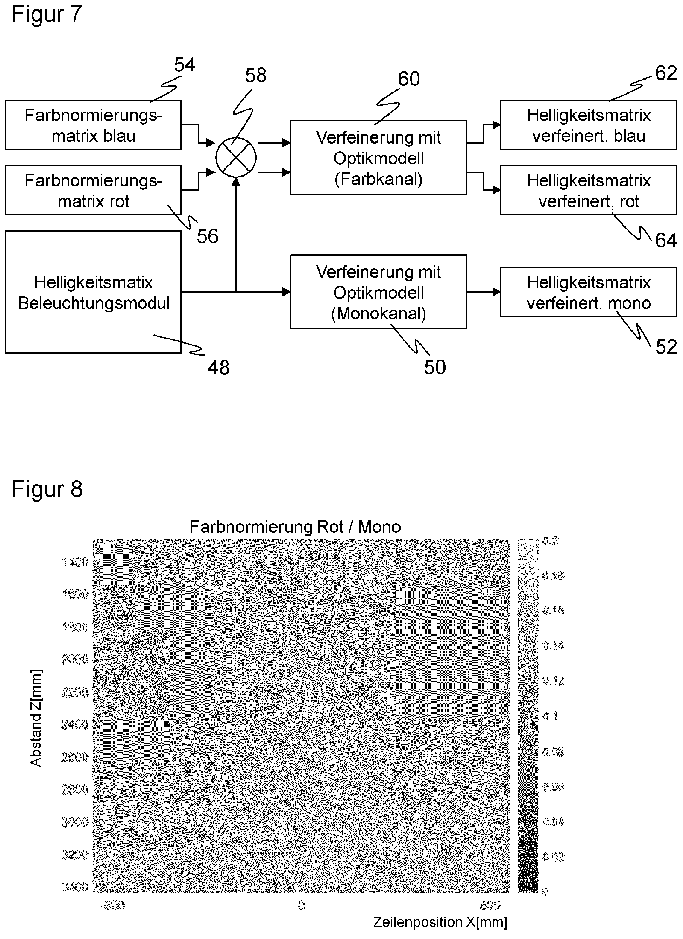

Die Bilddaten des Bildsensors 18 werden von einer Steuer- und Auswertungseinheit 24 ausgelesen. Die Steuer- und Auswertungseinheit 24 ist auf einem oder mehreren digitalen Bausteinen implementiert, beispielsweise Mikroprozessoren, ASICs, FPGAs oder dergleichen, die auch ganz oder teilweise außerhalb der Zeilenkamera 10 vorgesehen sein können. Ein bevorzugter Teil der Auswertung besteht darin, erfasste Bildzeilen zu einem Gesamtbild aneinanderzureihen. Ansonsten können bei der Auswertung die Bilddaten vorbereitend gefiltert, geglättet, auf bestimmte Bereiche zugeschnitten oder binarisiert werden. Erfindungsgemäß ist eine Helligkeits- beziehungsweise Farbkorrektur vorgesehen, die später unter Bezugnahme auf die Figuren 7 bis 14 näher erläutert wird. In einer bevorzugten Ausführungsform der Zeilenkamera 10 als Codeleser erfolgt typischerweise eine Segmentierung, in der einzelne Objekte und Codebereiche aufgefunden werden. Die Codes in diesen Codebereichen werden dann decodiert, es wird also die in den Codes enthaltene Information ausgelesen.

Um den Erfassungsbereich 14 mit Sendelicht 26 ausreichend hell auszuleuchten, ist ein Beleuchtungsmodul 28 mit einer Lichtquelle 30, typischerweise einer Vielzahl von Lichtquellen etwa in Form von LEDs sowie einer Sendeoptik 32 vorgesehen. Das Beleuchtungsmodul 28 ist in Figur 1 innerhalb eines Gehäuses 34 der Zeilenkamera 10 dargestellt. Das ist eine mögliche Ausführungsform, in der das Beleuchtungsmodul 28 spät in der Produktion oder sogar in das fertige Gerät nach der Produktion, beispielsweise am Betriebsort, in einen geeigneten Steckplatz der Zeilenkamera 10 eingesetzt ist. Alternativ weist das Beleuchtungsmodul 28 ein eigenes Gehäuse auf beziehungsweise ist ein externes Gerät und wird für den Betrieb mit der Zeilenkamera 10 verbunden.

An einer Schnittstelle 36 der Zeilenkamera 10 können Daten ausgegeben werden, und zwar sowohl gelesene Codeinformationen als auch sonstige Daten in verschiedenen Verarbeitungsstufen, wie Rohbilddaten, vorverarbeitete Bilddaten, identifizierte Objekte oder noch nicht decodierte Codebilddaten. Umgekehrt ist möglich, die Zeilenkamera 10 über die Schnittstelle 36 oder eine weitere Schnittstelle zu parametrieren.

Figur 2 zeigt eine mögliche Anwendung der Zeilenkamera 10 in Montage an einem Förderband 38, das Objekte 40 in einer Förderrichtung 42, wie durch den Pfeil angedeutet, durch den Erfassungsbereich 14 der Zeilenkamera 10 fördert. Die Objekte 40 können an ihren Außenflächen Codebereiche 44 tragen. Aufgabe der Zeilenkamera 10 in diesem Anwendungsbeispiel als Codeleser ist, die Codebereiche 44 zu erkennen, die dort angebrachten Codes auszulesen, zu dekodieren und dem jeweils zugehörigen Objekt 40 zuzuordnen. Um auch seitlich angebrachte Codebereiche 46 zu erkennen, werden vorzugsweise mehrere Zeilenkameras 10 aus unterschiedlicher Perspektive eingesetzt. Es kann zusätzliche Sensoren geben, beispielsweise einen vorgelagerten Laserscanner zur Erfassung der Geometrie der Objekte 40 oder einen Inkrementalgeber zur Erfassung der Geschwindigkeit des Förderbandes 38. Die stationäre Montage der Zeilenkamera 10 an einem Förderband 38 mit Objekten 40 ist auch in anderen bildauswertenden Anwendungen als das Codelesen denkbar.

Der Erfassungsbereich 14 der Zeilenkamera 10 ist entsprechend dem zeilenförmigen Bildsensor 18 eine Ebene mit einem zeilenförmigen Lesefeld. Entsprechend erzeugt das Beleuchtungsmodul 28 einen zeilenförmigen Beleuchtungsbereich, der abgesehen von Toleranzen dem Lesefeld entspricht. In Figur 2 ist das Beleuchtungsmodul 28 vereinfachend und rein schematisch als Block innerhalb der Zeilenkamera 10 eingezeichnet. Wie schon erwähnt, kann das Beleuchtungsmodul 28 ein externes Gerät sein. Indem die Objekte 40 in der Förderrichtung 42 zeilenweise aufgenommen werden, entsteht nach und nach ein Gesamtbild der vorbeigeförderten Objekte 40 samt der Codebereiche 44. Die Zeilen 20a-b liegen dabei so nahe beieinander, dass sie praktisch den gleichen Objektabschnitt erfassen. Alternativ kann ein Versatz auch rechnerisch kompensiert werden.

Die Zeilenkamera 10 erfasst mit ihrem Bildsensor 18 einerseits ein Grauwertbild oder Schwarz-Weiß-Bild, das für das Codelesen genutzt wird. Zusätzlich wird auch eine Farbinformation beziehungsweise ein Farbbild gewonnen. Die Farbinformation kann für eine Vielzahl von Zusatzfunktionen genutzt werden. Ein Beispiel ist die Klassifizierung von Objekten 40, etwa um herauszufinden, ob es sich um ein Paket, einen Briefumschlag oder eine Tüte handelt. Es kann festgestellt werden, ob ein Förderbandbehältnis leer ist, wie eine Schale eines Schalenförderers oder eine Kiste. Das Segmentieren der Bilddaten in Objekte 40 oder Codebereiche 44 kann anhand der Farbinformation vorgenommen oder davon unterstützt werden. Es können zusätzliche Bilderkennungsaufgaben gelöst werden, wie die Erkennung bestimmter Aufdrucke oder Aufkleber beispielsweise zur Gefahrgutkennzeichnung, oder Schriften gelesen werden (OCR, Optical Character Recognition).

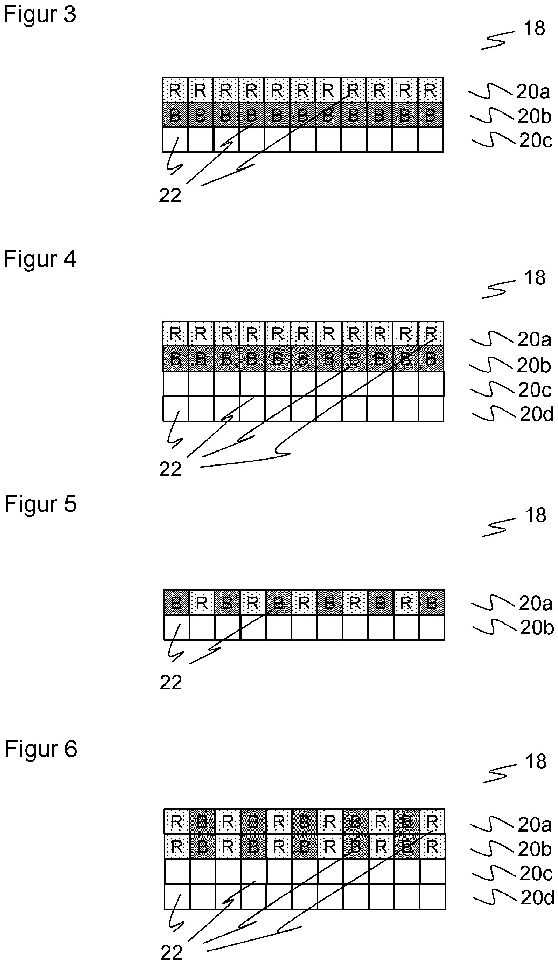

Die Figuren 3 bis 6 zeigen einige Beispiele von Ausführungsformen des Bildsensors 18 für eine solche Erfassung von Schwarz-Weiß-Bildern und Farbinformationen. Gemeinsam ist diesen Ausführungsformen, dass zumindest eine der Zeilen 20a-d eine weiße Zeile ist, deren Empfangspixel 22 in den Grenzen der Hardware Licht über das gesamte Spektrum erfassen. Zumindest eine weitere Zeile 20a-d ist eine farbige Zeile, deren Empfangspixel 22 nur für eine bestimmte Farbe empfindlich sind, insbesondere durch entsprechende Farbfilter. Die Verteilung der Farben über die jeweiligen Empfangspixel 22 der farbigen Zeilen unterscheidet sich je nach Ausführungsform, weicht jedoch von dem üblichen RGB und insbesondere einem Bayer-Pattern ab. Das Vorsehen mindestens einer vollständigen weißen Zeile ist bevorzugt, weil dadurch ein Grauwertbild in voller Auflösung aufgenommen wird. Ebenso ist eine Trennung in weiße und farbige Zeilen übersichtlicher. Prinzipiell sind jedoch abweichend Muster mit innerhalb der Zeilen 20a-d gemischten weißen und farbigen Empfangspixeln 22 vorstellbar. Die jeweiligen Empfangspixel 22 gleicher spektraler Empfindlichkeit werden in einem Monokanal für das Grauwertbild beziehungsweise je einem Farbkanal für ein Einfarbbild zusammengefasst, beispielsweise für rot empfindliche Empfangspixel 22 in einem roten Farbkanal für ein Rotbild und für blau empfindliche Empfangspixel 22 in einem blauen Farbkanal für ein Blaubild.

Figur 3 zeigt eine Ausführungsform mit je einer roten Zeile 20a, einer blauen Zeile 20b und einer weißen Zeile 20c. Die Zeilen 20a-c sind also in sich homogen und die Empfangspixel 22 innerhalb einer Zeile 20a-c für ein gleiches optisches Spektrum empfindlich. Figur 4 zeigt eine Variante mit einer zusätzlichen weißen Zeile 20d.

In der Ausführungsform nach Figur 5 sind für rot und für blau empfindliche Empfangspixel 22 innerhalb einer farbigen Zeile 20a alternierend gemischt. Dadurch ist in Kombination mit einer weißen Zeile 20b ein Aufbau mit insgesamt nur zwei Zeilen möglich. Figur 6 zeigt eine Variante, in der sowohl die farbige Zeile 20a-b als auch die weiße Zeile 20c-d gedoppelt ist.

Während für das Codelesen die hohe Auflösung der weißen Zeile erwünscht ist, werden in vielen Fällen die Farbinformationen nur in geringerer Auflösung benötigt. Daher ist ein gewisser Auflösungsverlust in den farbigen Zeilen wie in Figur 5 und 6 unter Umständen gar nicht störend. In manchen Fällen ist sogar denkbar, die Auflösung durch das Zusammenlegen von Pixeln künstlich zu verringern (Binning, Downsampling) und so das Signal-Rausch-Verhältnis zu verbessern.

Diese Beispiele sind nur eine Auswahl basierend auf den Grundfarben rot und blau mit weiß (RBW). Weitere Ausführungsformen nutzen andere Farbfilter und Farben. So wäre auch die Verwendung von grün mit rot oder blau (RGW, BGW) oder aller drei Grundfarben (RGBW) denkbar. Weiterhin kommen auch die subtraktiven Grundfarben blaugrün (cyan), purpur (magenta) und gelb in analogen Kombinationen in Betracht (CMW, CYW, MYW oder CMYW).

Die rohen Bilddaten der verschiedenfarbigen Empfangspixel 22 sind in vielerlei Hinsicht zu unausgeglichen, um brauchbare Farben zu liefern. Das liegt zum einen an der räumlichen Erfassungssituation, da ein Objekt 40 in großem Abstand und am Rand der Zeilen 20a-d einer anderen Beleuchtungsintensität ausgesetzt ist als ein nahes, zentrales Objekt 40. Es gibt demnach eine räumliche Abhängigkeit in einer X-Richtung der Zeilen 20a-d und einer Z-Richtung des Objektabstands. Das Beleuchtungsmodul 28 weist zudem spektrale Eigenschaften auf, bei denen sich die Helligkeiten in den verschiedenen Wellenlängenbereichen deutlich voneinander unterscheiden, insbesondere beim Einsatz von Halbleiterlichtquellen wie LEDs. Die räumlichen und spektralen Eigenschaften streuen zudem über die individuellen Beleuchtungsmodule 28 aufgrund beispielsweise von Chargenunterschieden der Lichtquellen 30 und sonstigen Toleranzen. Nachfolgend wird in verschiedenen vorteilhaften Ausführungsformen eine Helligkeits- und Farbkorrektur beschrieben, die individuelle Fluktuationen des Beleuchtungsmoduls 28 und/oder allgemeine spektrale und räumliche Fluktuationen kompensiert.

Figur 7 zeigt ein beispielhaftes Ablaufschema zur Erzeugung von korrigierten beziehungsweise normierten Grauwert- und Einfarbbildern, wobei dies ohne Beschränkung auf dieses Beispiel mit einem Monokanal für das Grauwertbild und zwei Farbkanälen für ein Rotbild und ein Blaubild beschrieben wird.

Das Beleuchtungsmodul 28 wird unabhängig von der Zeilenkamera 10 kalibriert, beispielsweise in der Endfertigung, um so flexibel dessen individuelle Besonderheiten durch Toleranzen, Chargenunterschiede und dergleichen berücksichtigen zu können. Beispielsweise wird das Beleuchtungsmodul 28 in der Produktion auf einem Verschiebetisch vermessen, wobei mehrere lateral, also in X-Richtung verteilte Lichtempfangselemente oder Photodioden jeweils unter Verschieben in unterschiedliche Abstände zu dem Beleuchtungsmodul 28 einen Helligkeitswert für die jeweilige (X, Z)-Position der Photodiode liefern. Daraus ergibt sich eine Helligkeitsmatrix, die beispielsweise eine Auflösung von 10x10 aufweist, d.h. es wurde in zehn Abständen mit zehn lateral verteilten oder alternativ einer pro Abstand zehnmal lateral verschobenen Photodioden vermessen. Die Auflösung kann natürlich abweichen, insbesondere ist keineswegs eine gleiche Auflösung in X- und Z-Richtung erforderlich, aber zu wenige Werte ergeben eine unvollständige Kompensation, während zu viele Werte den Kalibrationsaufwand unnötig erhöhen.

Die so vorab gewonnene Helligkeitsmatrix 48 des Beleuchtungsmoduls 28 wird in einem vorzugsweise nichtflüchtigen Speicher des Beleuchtungsmoduls 28 abgelegt (EEPROM) und ein Ausgangspunkt des Ablaufschemas in Figur 7. Für die eigentliche Anwendung, vorzugsweise bereits am Betriebsort, wird das Beleuchtungsmodul 28 an die Zeilenkamera 10 angeschlossen. Zuvor muss durch nichts festgelegt sein, welches Beleuchtungsmodul 28 in welcher Zeilenkamera 10 zum Einsatz kommen wird, die beiden Geräte machen sich flexibel miteinander bekannt.

Als ein in Figur 7 nicht gezeigter erster Abgleichschritt können in der Zeilenkamera 10 unterschiedliche Verstärkungsfaktoren im Monokanal und in den beiden Farbkanälen verwendet werden, d.h. $\text{gain}_{\text{farbe},i} = \kappa_i\, \text{gain}_{\text{mono}}$ mit $\kappa_i > 1$. Eine Differenzierung der Farbkanäle untereinander ist optional, es kann also $\kappa_i = \kappa$ für alle $i$ Farbkanäle gelten. Damit kommen Monokanal und Farbkanäle bereits in einen ähnlichen dynamischen Bereich. Sofern dies hardwareseitig mit dem Bildsensor 18 möglich ist, etwa getrennte Weiß- und Farbzeilen, erfolgt die unterschiedliche Verstärkung schon analog und erreicht so bessere Signal-Rausch-Eigenschaften. Alternativ oder zusätzlich sind digitale Verstärkungen möglich. Rein digitale Verstärkungsfaktoren können vereinfachend in die vorzustellenden Korrekturmatrizen der Farbkanäle multipliziert werden.

Für einen Helligkeitsabgleich liest die Zeilenkamera 10 nun in einer Monokanal-Verfeinerung 50 die im Beleuchtungsmodul 28 gespeicherte Helligkeitsmatrix 48 aus. Unter Verwendung von optischen Parametern wie Brennweite, Blende und dergleichen wird eine verfeinerte Monokanal-Helligkeitsmatrix 52 errechnet, die deutlich mehr Einträge als die ursprüngliche Helligkeitsmatrix 48 enthält. Die Monokanal-Helligkeitsmatrix 52 kompensiert Inhomogenitäten in der Beleuchtung dieses individuellen Beleuchtungsmoduls 28 entlang der Zeilenachse oder X-Achse sowie entlang der Z-Achse durch den Intensitätsabfall bei zunehmendem Abstand. Damit ist ein Weißabgleich für den Monokanal beziehungsweise das Grauwertbild erreicht.

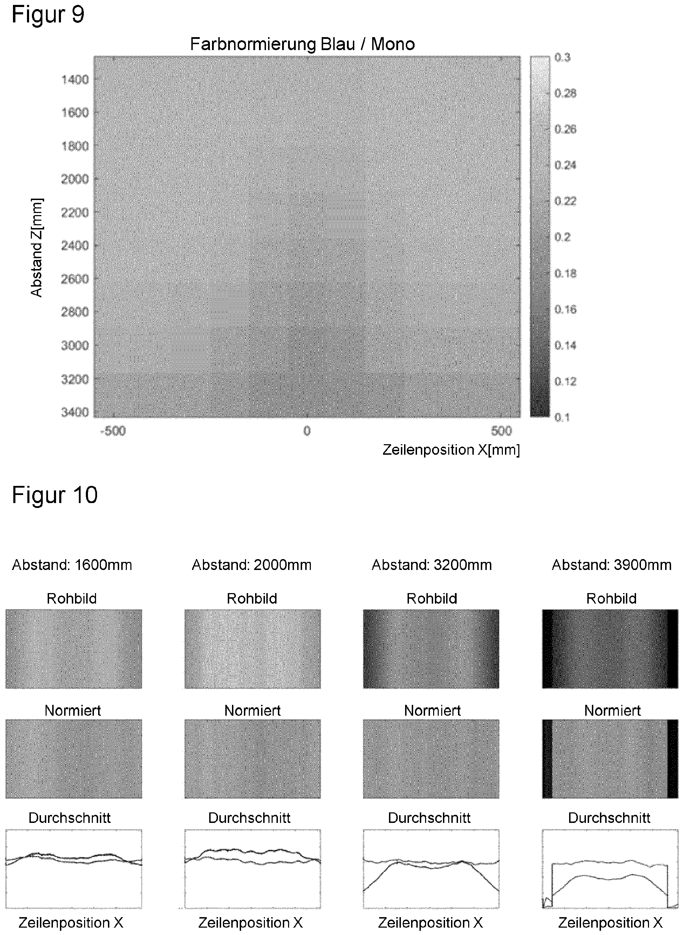

In den Farbkanälen sind zusätzlich die spektralen Unterschiede zu berücksichtigen. Dafür werden zusätzliche Farbnormierungsmatrizen 54, 56 verwendet. Farbnormierungsmatrizen 54, 56 haben die gleichen Dimensionen X, Z wie die Helligkeitsmatrix 48, können aber in ihrer Auflösung abweichen, was dann beispielsweise durch Interpolation ausgeglichen wird. Figur 8 zeigt ein Beispiel einer Farbnormierungsmatrix 54 für blau und Figur 9 ein Beispiel einer Farbnormierungsmatrix 56 für rot. Um diese Farbnormierungsmatrizen 54, 56 zu gewinnen, werden Spektrometermessungen des Beleuchtungsmoduls 28 durchgeführt, und dann wird je (X, Z) - Position das Verhältnis der Intensität in der jeweiligen Farbe blau oder rot zu der Intensität über das gesamte Spektrum gebildet. Anschaulich gibt eine Farbnormierungsmatrix 54, 56 eine ortsaufgelöste Verteilung an, welchen Anteil die zugehörige Farbe an der Gesamtintensität hat. Farbnormierungsmatrizen 54, 56 werden vorzugsweise nicht für jedes Beleuchtungsmodul 28 individuell bestimmt, sondern einmalig für einen Typ oder eine Baureihe von Beleuchtungsmodulen 28. Sie sind dann unabhängig von der Produktion bekannt und können wahlweise in dem Beleuchtungsmodul 28 oder der Zeilenkamera 10 beispielsweise als Tabelle (LUT, Lookup Table) gespeichert werden.

In einem Kombinationsschritt 58 werden pro Farbkanal die Farbnormierungsmatrizen 54, 56 mit der Helligkeitsmatrix 48 gemischt. Dazu können in einer einfachen vorteilhaften Umsetzung die einzelnen Einträge miteinander multipliziert werden, sofern alle Matrizen 48, 54, 56 geeignet normiert sind oder werden. Alternativ erfolgt eine komplexere kombinierende Verrechnung, die auch eine Auflösungsanpassung der Matrizen 48, 54, 56 beinhalten kann.

Die jeweiligen resultierenden Kompensationsmatrizen werden dann einer Farbkanal-Verfeinerung 60 unterzogen. Dafür kann derselbe Algorithmus verwendet werden wie in der Monokanal-Verfeinerung 50, oder es werden farbspezifische Eigenschaften berücksichtigt, die den Algorithmus für die Farbkanäle gemeinsam oder sogar individuelle Farbkanäle modifizieren. Das Resultat sind verfeinerte Farbkanal-Helligkeitsmatrizen 62, 64 für den blauen beziehungsweise den roten Farbkanal. Damit wird ein Weißabgleich nun auch für die Farbkanäle und damit die Einfarbbilder erreicht. Die verfeinerten Helligkeitsmatrizen 52, 62, 64 müssen nur einmalig beispielsweise bei der Inbetriebnahme oder der Verbindung zwischen einem Beleuchtungsmodul 28 und einer Zeilenkamera 10 berechnet werden.

In der unter Bezugnahme auf die Figur 7 erläuterten Helligkeitskorrektur im Monokanal und in den Farbkanälen ist die Helligkeitsmatrix 48 unabhängig von spektralen Eigenschaften aufgenommen, und farbspezifische Anpassungen werden durch die Farbnormierungsmatrizen 54, 56 vorgenommen. Alternativ ist denkbar, die Helligkeitsmatrix 48 direkt in unterschiedlichen Farben aufzunehmen und so in dem Beleuchtungsmodul 28 zu speichern. Dann werden für den Monokanal und jeden Farbkanal unterschiedliche Helligkeitsmatrizen 48 erzeugt. Die Information der Farbnormierungsmatrizen 54, 56 ist darin schon enthalten, und der Kombinationsschritt 58 kann entfallen. Dazu können insbesondere für die Vermessung des Beleuchtungsmoduls 28 Lichtempfänger oder Photodioden mit entsprechenden Farbfiltern statt wie oben für Weißlicht empfindliche Photodioden eingesetzt werden. Die Farbnormierung wird dann sogar für das Beleuchtungsmodul 28 individuell vorgenommen statt wie bisher allgemein für einen Typ oder eine Baureihe.

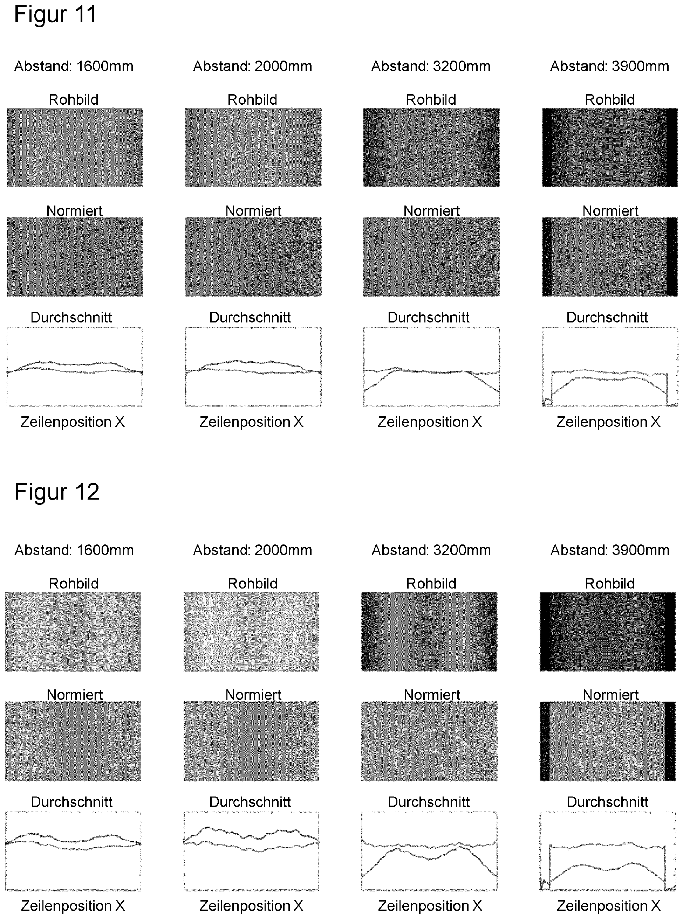

Die Figuren 10 bis 12 illustrieren das bisher erreichte Ergebnis von normierten Weiß-, Rot- und Blauwerten. Die Figuren sind jeweils gleichartig aufgebaut, wobei Figur 10 den Monochromkanal, Figur 11 den Rotkanal und Figur 12 den Blaukanal illustriert. Dabei sind vorab Rot- und Blaukanal gegenüber dem Monokanal um einen Verstärkungsfaktor von ungefähr drei angehoben. In den Spalten wird der Abstand oder die Z-Richtung variiert. Die obere Zeile zeigt ein Rohbild mit der Zeilenposition X auf der X-Achse und verschiedenen nacheinander aufgenommenen Zeilen auf der Y-Achse. Die zweite Zeile zeigt das zugehörige Ergebnis in Form eines normierten Bildes. In der untersten Zeile ist ein Durchschnitt über die Bildzeilen des Rohbildes im Vergleich zu einem Durchschnitt über die Bildzeilen des normierten Bildes dargestellt. Die etwas heller gezeichnete Linie zu dem normierten Bild verläuft zumindest annähernd flach, die Normierung hat also wie gewünscht die unregelmäßigen Verläufe der dunkleren Linie zu dem Rohbild nivelliert.

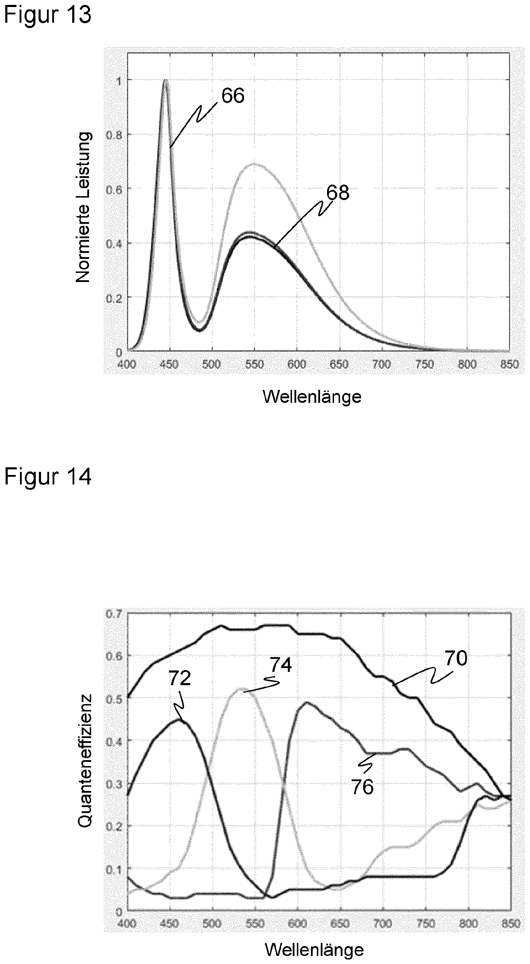

Die derart normierten Bilddaten können als Eingangsdaten einer weitergehenden Farbnormierung und -rekonstruktion verwendet werden. Figur 13 zeigt zunächst ein beispielhaftes Beleuchtungsspektrum eines Beleuchtungsmoduls 28. Deutlich sind ein Peak 66 für blau und ein Peak 68 für rot zu erkennen. Die mehreren Linien rühren daher, dass das Beleuchtungsspektrum aufgrund der Dispersion der Optiken abstandsabhängig ist. Figur 14 zeigt komplementär beispielhafte Quanteneffizienzen von Farbfiltern für Empfangspixel 22 mit einer weißen Kennlinie 70, blauen Kennlinie 72, grünen Kennlinien 74 und roten Kennlinien 76.

In einem Wellenlängenbereich um 480 nm findet sich in dem Beleuchtungsspektrum der Figur 13 ein lokales Minimum. Dort wäre typischerweise gemäß dem Beispiel der Figur 14 das Transmissionsfenster eines grünen Filters zu finden. Deshalb werden vorzugsweise ein blauer und roter Farbkanal eingesetzt, die auf einem weißen Ziel ähnliche Intensitäten liefern, und kein grüner Farbkanal. So wird der Dynamikbereich besser ausgenutzt und ein besseres Signal-Rausch-Verhältnis erzielt.

Bei der Wahl eines blauen und roten Farbkanals werden Bilddaten nur in zwei Grundfarben bestimmt. Ist eine Repräsentation der Farbe in RGB-Werten erwünscht, so lässt sich die fehlende Farbe grün aus einer Funktion f(W, R, B) und im ersten Ansatz aus G=3*W-R-B rekonstruieren. Dies genügt jedoch für eine gute Farbwiedergabe noch nicht, da das Beleuchtungsspektrum inhomogen ist und im grünen Wellenlängenbereich ein lokales Minimum aufweist. Einen gewissen Ausgleich haben die oben beschriebenen Normierungen geschaffen. Für ein möglichst farbtreues Ergebnis werden nun vorzugsweise Korrelationen zwischen R, B und W ermittelt und genutzt. Das sind beispielsweise Linearkombinationen der Form

$$R'=x_1*R+x_2*(3*W-R-B)+x_3*B+x_4$$

$$G'=x_5*R+x_6*(3*W-R-B)+x_7*B+x_8$$

$$B'=x_9*R+x_{10}*(3*W-R-B)+x_{11}*B+x_{12}$$

mit Korrelations- oder Gewichtungsfaktoren $x_1...x_{12}$. Die Gewichtungsfaktoren $x_1...x_{12}$ sind empirisch bestimmt und statisch. Für andere Farbkanäle als blau und rot ohne grün sind entsprechende Korrekturen möglich.

Die Gewichtungsfaktoren ermöglichen eine Farbwiedergabe trotz des in Figur 13 gezeigten lokalen Minimums im grünen Spektrum. Zur Veranschaulichung kann man sich vorstellen, dass die Zeilenkamera 10 ein grünes Ziel erfasst. Im Blaukanal wie im Rotkanal wird fast kein grünes Licht durchgelassen, die aufgenommene Intensität ist nahe Null. Im Monokanal wird, siehe beispielhaft die weiße Kennlinie 70 in Figur 14, das wenige vorhandene grüne Licht durchgelassen und ergibt eine Intensität etwas über Null. Ein hoher Wert $x_6$ in Kombination mit korrigierenden Werten $x_5$ und $x_7$ kann den Grünwert G' rekonstruieren. Bei einem alternativen schwarzen Ziel würde in keinem Kanal eine signifikante Intensität erfasst, was die Faktoren $x_5..x_7$ in der Gleichung für G' nicht ändert, so dass ganz richtig ein Grünwert nahe Null rekonstruiert wird. Hier zeigt sich, dass die Offsetwerte $x_4$, $x_8$, $x_{12}$ sinnvollerweise nicht zu groß oder sogar bei Null gewählt werden. Bei einem grauen Ziel geben beide Farbkanäle ein gewisses Signal und rekonstruieren einen gewissen Grünwert G', was in Summe wie erwünscht die RGB-Farbe grau ergibt.

Alternativ oder zusätzlich zu den vorgestellten Gewichtungsfaktoren wird ein neuronales Netz insbesondere mit mehreren versteckten Ebenen eingesetzt. Als Eingang wird ein roher oder vorkorrigierter Farbvektor vorgegeben, und das neuronale Netz liefert einen korrigierten Farbvektor zurück. Trainieren lässt sich ein solches neuronales Netz beispielsweise mit einem zusätzlichen Farbsensor, der in einem überwachten Lernen für Trainingsbilder die zu lernenden Farben vorgibt. Algorithmen oder neuronale Netze können zudem verwendet werden, um das Signal-Rausch-Verhalten durch Berücksichtigung der Farbwerte der benachbarten Pixel zu verbessern.

## Patentansprüche

1. Verfahren zur Helligkeits- und Farbkorrektur von Bilddaten einer Zeilenkamera (10), insbesondere einer codelesenden Zeilenkamera, wobei zur Erfassung der Bilddaten mit mindestens zwei Zeilenanordnungen (20a-b) der Zeilenkamera (10) unter Beleuchtung eines Erfassungsbereichs (14) der Zeilenkamera (10) mit einem Beleuchtungsmodul (28) ein Grauwertbild und mindestens zwei Einfarbbilder aufgenommen werden und die Bilddaten mit Hilfe einer von einer Zeilenposition der Zeilenanordnung (20a-b) und/oder einem Abstand aufgenommener Objekte abhängigen Helligkeitsfunktion des Beleuchtungsmoduls (28) korrigiert werden,
   **dadurch gekennzeichnet,**
   **dass** die Helligkeitsfunktion (48) vorab und unabhängig von der Zeilenkamera (10) für das Beleuchtungsmodul (28) bestimmt wird, indem während einer Kalibrierungsmessung mehrere in Zeilenrichtung verteilte Lichtempfangselemente oder ein mehrfach in Zeilenrichtung verschobenes Lichtempfangselement in unterschiedlichen Abständen zu dem Beleuchtungsmodul (28) einen Helligkeitswert messen, dass die Helligkeitsfunktion (48) in dem Beleuchtungsmodul (28) gespeichert wird und dass die Helligkeitsfunktion (48) später im Betrieb von der Zeilenkamera (10) ausgelesen und zur jeweiligen Korrektur des Grauwertbildes und der Einfarbbilder verwendet wird.

2. Verfahren nach Anspruch 1,
   wobei das Grauwertbild zum Lesen von Codes (44) verwendet wird.

3. Verfahren nach Anspruch 1 oder 2,
   wobei aus den Einfarbbildern ein Farbbild erzeugt und das Farbbild insbesondere dafür verwendet wird, um codetragende Objekte (40) und/oder Codebereiche (44) zu erkennen, zu klassifizieren und/oder vom Bildhintergrund zu unterscheiden.

4. Verfahren nach einem der vorhergehenden Ansprüche,
   wobei die Helligkeitsfunktion (48) jeweils mittels einer Farbnormierungsfunktion (54, 56) für die Farbe des Einfarbbildes modifiziert wird, so dass die Korrektur für das Grauwertbild und die Einfarbbilder jeweils mit einer eigenen Helligkeitsfunktion vorgenommen wird, wobei eine Farbnormierungsfunktion (54, 56) für verschiedene Zeilenpositionen und Abstände die Helligkeit des Beleuchtungsmoduls (28) in ihrer Farbe ins Verhältnis zur Helligkeit über das ganze Spektrum setzt.

5. Verfahren nach Anspruch 4,
wobei die Farbnormierungsfunktionen (54, 56) vorab allgemein für den Typ des Beleuchtungsmoduls (28) bestimmt sind.

6. Verfahren nach Anspruch 4,
wobei die Farbnormierungsfunktionen vorab individuell für das Beleuchtungsmodul (28), insbesondere mit der Helligkeitsfunktion (48) bestimmt werden.

7. Verfahren nach einem der vorhergehenden Ansprüche,
wobei die Helligkeitsfunktion (52, 62, 64) anhand optischer Parameter der Zeilenkamera (10) verfeinert wird.

8. Verfahren nach einem der vorhergehenden Ansprüche,
wobei das Grauwertbild und die Einfarbbilder mit unterschiedlichen analogen und/oder digitalen Verstärkungen aufgenommen werden.

9. Verfahren nach einem der vorhergehenden Ansprüche,
wobei zwei Einfarbbilder in zwei von drei Grundfarben aufgenommen werden.

10. Verfahren nach Anspruch 9,
wobei die dritte Grundfarbe aus dem Grauwertbild und den beiden Einfarbbildern rekonstruiert wird.

11. Verfahren nach Anspruch 9 oder 10,
wobei die beiden Grundfarben rot und blau sind.

12. Verfahren nach einem der vorhergehenden Ansprüche,
wobei korrigierte Farbwerte eines Farbbildes aus Linearkombinationen jeweiliger Grauwerte des Grauwertbildes und Einfarbwerte der Einfarbbilder mit farbkorrigierenden Gewichtungsfaktoren gebildet werden.

13. Verfahren nach Anspruch 12,

wobei korrigierte RGB-Werte R'G'B' zu einem Grauwertbild mit Grauwerten W, einem Rotbild mit Rotwerten R und einem Blaubild mit Blauwerten B zu

$$R'=x_1*R+x_2*(3*W-R-B)+x_3*B+x_4$$

$$G'=x_5*R+x_6*(3*W-R-B)+x_7*B+x_8$$

$$B'=x_9*R+x_{10}*(3*W-R-B)+x_{11}*B+x_{12}$$

mit Gewichtungsfaktoren $x_1...x_{12}$ gebildet werden.

14. Verfahren nach Anspruch 12 oder 13,
wobei die korrigierten Farbwerte mit einem neuronalen Netz bestimmt werden, das anhand von Farbbildern mindestens eines weiteren farbsensitiven Sensors eingelernt wird.

15. Kamera (10), insbesondere Codeleser zum Lesen eines optischen Codes (44), die einen zeilenförmigen Bildsensor (18) mit mindestens zwei Zeilenanordnungen (20a-b) von Lichtempfangspixeln (22) zum Aufnehmen von Bilddaten, ein Beleuchtungsmodul (28) und eine Steuer- und Auswertungseinheit (24) zur Verarbeitung der Bilddaten aufweist, wobei die Zeilenanordnungen (20a-b) einen Monokanal, deren Lichtempfangspixel (22) zur Aufnahme eines Grauwertbildes für weißes Licht empfindlich sind, und mindestens zwei Farbkanäle bilden, deren Lichtempfangspixel (22) jeweils nur für Licht in der Farbe ihres Farbkanals empfindlich sind,
**dadurch gekennzeichnet,**
**dass** in dem Beleuchtungsmodul (28) eine von einer Zeilenposition der Zeilenanordnung (20a-b) und/oder einem Abstand aufgenommener Objekte abhängigen Helligkeitsfunktion des Beleuchtungsmoduls (28) gespeichert ist, die während einer Kalibrierungsmessung durch Messen von Helligkeitswerten mit mehreren in Zeilenrichtung verteilten Lichtempfangselementen oder einem mehrfach in Zeilenrichtung verschobenen Lichtempfangselement in unterschiedlichen Abständen zu dem Beleuchtungsmodul (28) bestimmt ist, und dass die Steuer- und Auswertungseinheit (24) dafür ausgebildet ist, später im Betrieb die Helligkeitsfunktion (48) aus dem Beleuchtungsmodul (28) auszulesen und mit Hilfe der Helligkeitsfunktion (48) die Bilddaten in Helligkeit und Farbe mit einem Verfahren nach einem der vorhergehenden Ansprüche zu korrigieren.

**Claims**

1. A method for brightness and color correction of image data of a line scan camera (10), in particular a code-reading line scan camera, wherein, in order to record the image data with at least two line arrangements (20a-b) of the line scan camera (10), a gray-scale image and at least two monochrome images are recorded with an illumination module (28) while illuminating a detection area (14) of the line scan camera (10), and the image data are corrected with the aid of a brightness function of the illumination module (28) which is dependent on a line position of the line arrangement (20a-b) and/or a distance of recorded objects,
   **characterized in that** the brightness function (48) is determined in advance and independently of the line scan camera (10) for the illumination module (28) by measuring a brightness value during a calibration measurement by a plurality of light-receiving elements distributed in the line direction or a light-receiving element displaced several times in the line direction at different distances from the illumination module (28), **in that** the brightness function (48) is stored in the illumination module (28) and **in that** the brightness function (48) is later read out by the line scan camera (10) during operation and is used for the respective correction of the gray-scale image and the monochrome images.

2. The method according to claim 1,
   wherein the gray scale image is used to read codes (44).

3. The method according to claim 1 or 2,
   wherein a color image is generated from the monochrome images and the color image is used in particular to detect, classify and/or distinguish code-carrying objects (40) and/or code regions (44) from the image background.

4. The method according to any of the preceding claims,
   wherein the brightness function (48) is modified by means of a color normalization function (54, 56) for the color of the monochrome image, so that the correction for the gray value image and the monochrome images is carried out with a separate brightness function, wherein a color normalization function (54, 56) for different line positions and distances sets the brightness of the illumination module (28) in its color in relation to the brightness over the entire spectrum.

5. The method according to claim 4,
   wherein the color normalization functions (54, 56) are determined in advance generally for the type of illumination module (28).

6. The method according to claim 4,
   wherein the color normalization functions are determined in advance individually for the illumination module (28), in particular with the brightness function (48).

7. The method according to any of the preceding claims,
   wherein the brightness function (52, 62, 64) is refined on the basis of optical parameters of the line scan camera (10).

8. The method according to any of the preceding claims,
   wherein the gray scale image and the monochrome images are recorded with different analog and/or digital gains.

9. The method according to any of the preceding claims,
   wherein two monochrome images are recorded in two of three primary colors.

**10.** The method according to claim 9,
wherein the third basic color is reconstructed from the gray scale image and the two monochrome images.

**11.** The method according to claim 9 or 10,
wherein the two primary colors are red and blue.

**12.** The method according to any of the preceding claims,
wherein corrected color values of a color image are formed from linear combinations of respective gray values of the gray value image and monochrome values of the monochrome images with color-correcting weighting factors.

**13.** The method according to claim 12,

wherein corrected RGB values R'G'B' for a gray-scale image with gray values W, a red image with red values R and a blue image with blue values B are formed as

$$R' = x * R + x_{12} * (3*W - R - B) + x * B + x_{34}$$

$$G' = x * R + x_{56} * (3*W - R - B) + x * B + x_{78}$$

$$B' = x * R + x_{910} * (3*W - R - B) + x * B + x_{1112}$$

with weighting factors $x_1 \ldots x_{12}$.

**14.** The method according to claim 12 or 13,
wherein the corrected color values are determined using a neural network which is learned using color images from at least one further color-sensitive sensor.

**15.** A camera (10), in particular code reader for reading an optical code (44), comprising a line-shaped image sensor (18) with at least two line arrangements (20a-b) of light-receiving pixels (22) for recording image data, an illumination module (28) and a control and evaluation unit (24) for processing the image data, wherein the line arrays (20a-b) form a monochannel, the light-receiving pixels (22) of which are sensitive to white light for recording a gray-scale image, and at least two color channels, the light-receiving pixels (22) of which are each sensitive only to light in the color of their color channel,
**characterized in that** a brightness function of the illumination module (28) that is dependent on a line position of the line arrangement (20a-b) and/or a distance of recorded objects is stored in the illumination module (28) and is determined during a calibration measurement by measuring brightness values with a plurality of light-receiving elements distributed in the line direction or a light-receiving element displaced several times in the line direction at different distances from the illumination module (28), and **in that** the control and evaluation unit (24) is configured to read out the brightness function (48) from the illumination module (28) later during operation and to correct the image data in brightness and color with the aid of the brightness function (48) using a method according to any of the preceding claims.

**Revendications**

**1.** Procédé de correction de la luminosité et des couleurs de données d'image d'une caméra à balayage linéaire (10), en particulier d'une caméra à balayage linéaire à lecture de code, dans lequel, pour saisir les données d'image, une image en niveaux de gris et au moins deux images monochromes sont enregistrées au moyen d'au moins deux ensembles linéaires (20a-b) de la caméra à balayage linéaire (10), avec éclairage d'une zone de saisie (14) de la caméra à balayage linéaire (10) au moyen d'un module d'éclairage (28), et les données d'image sont corrigées à l'aide d'une fonction de luminosité du module d'éclairage (28), qui dépend d'une position linéaire de l'ensemble linéaire (20a-b) et/ou d'une distance d'objets enregistrés,
**caractérisé en ce que**
la fonction de luminosité (48) est déterminée pour le module d'éclairage (28) au préalable et indépendamment de la caméra à balayage linéaire (10), du fait que pendant une mesure de calibrage, plusieurs éléments de réception de lumière répartis dans la direction des lignes ou un élément de réception de lumière déplacé plusieurs fois dans la direction des lignes mesure(nt) une valeur de luminosité à différentes distances par rapport au module d'éclairage (28), **en ce que** la fonction de luminosité (48) est mémorisée dans le module d'éclairage (28), et **en ce que** la fonction de luminosité (48) est lue ultérieurement en fonctionnement par la caméra à balayage linéaire (10) et est utilisée pour la correction respective de l'image en niveaux de gris et des images monochromes.

**2.** Procédé selon la revendication 1,
dans lequel l'image en niveaux de gris est utilisée pour lire des codes (44).

**3.** Procédé selon la revendication 1 ou 2,
dans lequel une image couleur est générée à partir des images monochromes, et l'image couleur est utilisée en particulier pour détecter, classer, et/ou distinguer de l'arrière-plan de l'image, des objets porteurs de codes (40) et/ou des zones de codes (44).

**4.** Procédé selon l'une des revendications précédentes,
dans lequel la fonction de luminosité (48) est modifiée respectivement au moyen d'une fonction de normalisation de couleur (54, 56) pour la couleur de l'image monochrome, de sorte que la correction pour l'image en niveaux de gris et les images monochromes est effectuée respectivement avec une fonction de luminosité propre, sachant qu'une fonction de normalisation de couleur (54, 56) pour différentes positions linéaires et différentes distances met en relation la luminosité du module d'éclairage (28) dans sa couleur avec la luminosité sur l'ensemble du spectre.

**5.** Procédé selon la revendication 4,
dans lequel les fonctions de normalisation de couleur (54, 56) sont déterminées au préalable de manière générale pour le type de module d'éclairage (28).

**6.** Procédé selon la revendication 4,
dans lequel les fonctions de normalisation de couleur sont déterminées au préalable individuellement pour le module d'éclairage (28), en particulier à l'aide de la fonction de luminosité (48).

**7.** Procédé selon l'une des revendications précédentes,
dans lequel la fonction de luminosité (52, 62, 64) est affinée à l'aide de paramètres optiques de la caméra à balayage linéaire (10).

**8.** Procédé selon l'une des revendications précédentes,
dans lequel l'image en niveaux de gris et les images monochromes sont enregistrées avec des amplifications analogiques et/ou numériques différentes.

**9.** Procédé selon l'une des revendications précédentes,
dans lequel deux images monochromes sont enregistrées dans deux des trois couleurs primaires.

**10.** Procédé selon la revendication 9,
dans lequel la troisième couleur primaire est reconstruite à partir de l'image en niveaux de gris et des deux images monochromes.

**11.** Procédé selon la revendication 9 ou 10,
dans lequel les deux couleurs primaires sont le rouge et le bleu.

**12.** Procédé selon l'une des revendications précédentes,
dans lequel des valeurs chromatiques corrigées d'une image en couleur sont formées à partir de combinaisons linéaires de niveaux de gris respectifs de l'image en niveaux de gris et de valeurs monochromes des images monochromes avec des facteurs de pondération de correction chromatique.

**13.** Procédé selon la revendication 12,

dans lequel des valeurs RGB corrigées R'G'B' relatives à une image en niveaux de gris avec des valeurs de gris W, à une image rouge avec des valeurs de rouge R et à une image bleue avec des valeurs de bleu B sont transformées en

$$R' = x_1 * R + x_2 * (3 * W\text{-}R\text{-}B) + x_3 * B + x_4$$

$$G' = x_5 * R + x_6 * (3 * W\text{-}R\text{-}B) + x_7 * B + x_8$$

$$B' = x_9 * R + x_{10} * (3 * W\text{-}R\text{-}B) + x_{11} * B + x_{12}$$

avec des facteurs de pondération $x_1 \ldots x_{12}$.

14. Procédé selon la revendication 12 ou 13,
dans lequel les valeurs chromatiques corrigées sont déterminées à l'aide d'un réseau neuronal qui est appris à l'aide d'images couleur d'au moins un autre capteur sensible à la couleur.

15. Caméra (10), en particulier lecteur de code pour lire un code optique (44), qui comprend un capteur d'image (18) en forme de ligne avec au moins deux ensembles linéaires (20a-b) de pixels de réception de lumière (22) pour enregistrer des données d'image, un module d'éclairage (28) et une unité de commande et d'évaluation (24) pour traiter les données d'image, dans laquelle les ensembles linéaires (20a-b) forment un canal mono, dont les pixels de réception de lumière (22) sont sensibles à la lumière blanche pour l'enregistrement d'une image en niveaux de gris, et au moins deux canaux de couleur, dont les pixels de réception de lumière (22) ne sont sensibles respectivement qu'à la lumière dans la couleur de leur canal de couleur,
**caractérisée en ce que**
une fonction de luminosité du module d'éclairage (28), dépendant d'une position linéaire de l'ensemble linéaire (20a-b) et/ou d'une distance d'objets enregistrés, est mémorisée dans le module d'éclairage (28), laquelle est déterminée pendant une mesure de calibrage par la mesure de valeurs de luminosité au moyen de plusieurs éléments de réception de lumière répartis dans la direction des lignes ou au moyen d'un élément de réception de lumière déplacé plusieurs fois dans la direction des lignes à différentes distances par rapport au module d'éclairage (28), et **en ce que** l'unité de commande et d'évaluation (24) est conçue pour lire ultérieurement en fonctionnement la fonction de luminosité (48) dans le module d'éclairage (28) et pour corriger à l'aide de la fonction de luminosité (48) les données d'image en termes de luminosité et de couleur par un procédé selon l'une des revendications précédentes.

Figur 1

Figur 2

## Figur 3

18

| R | R | R | R | R | R | R | R | R | R | R | R | 20a |
| B | B | B | B | B | B | B | B | B | B | B | B | 20b |
|   |   |   |   |   |   |   |   |   |   |   |   | 20c |

22

## Figur 4

18

| R | R | R | R | R | R | R | R | R | R | R | R | 20a |
| B | B | B | B | B | B | B | B | B | B | B | B | 20b |
|   |   |   |   |   |   |   |   |   |   |   |   | 20c |
|   |   |   |   |   |   |   |   |   |   |   |   | 20d |

22

## Figur 5

18

| B | R | B | R | B | R | B | R | B | R | B | R | B | 20a |
|   |   |   |   |   |   |   |   |   |   |   |   |   | 20b |

22

## Figur 6

18

| R | B | R | B | R | B | R | B | R | B | R | B | R | 20a |
| R | B | R | B | R | B | R | B | R | B | R | B | R | 20b |
|   |   |   |   |   |   |   |   |   |   |   |   |   | 20c |
|   |   |   |   |   |   |   |   |   |   |   |   |   | 20d |

22

## Figur 7

```
┌─────────────────────┐
│  Farbnormierungs-   │⟋54
│    matrix blau      │
└─────────────────────┘
          ╲
┌─────────────────────┐   58
│  Farbnormierungs-   │    ⟋        60
│    matrix rot       │  ⊗  ──→ ┌──────────────────┐    ┌──────────────────┐⟋62
└─────────────────────┘ ╱ ╲     │  Verfeinerung mit │──→ │  Helligkeitsmatrix│
                    56 ⟋  │     │    Optikmodell    │    │  verfeinert, blau │
┌─────────────────────┐   │     │    (Farbkanal)    │    └──────────────────┘
│                     │   │     └──────────────────┘    ┌──────────────────┐
│   Helligkeitsmatix  │   │                             │  Helligkeitsmatrix│
│  Beleuchtungsmodul  │───┘──→ ┌──────────────────┐     │  verfeinert, rot  │
│                     │        │  Verfeinerung mit │     └──────────────────┘
│                     │        │    Optikmodell    │            ╲64
└─────────────────────┘        │    (Monokanal)    │──→  ┌──────────────────┐
         ╲48                   └──────────────────┘      │  Helligkeitsmatrix│
                                      ╲50               │  verfeinert, mono │
                                                         └──────────────────┘
                                                                 ╲52
```

Farbnormierungs-matrix blau 54 — Farbnormierungs-matrix rot 56 — ⊗ 58 — Verfeinerung mit Optikmodell (Farbkanal) 60 — Helligkeitsmatrix verfeinert, blau 62 — Helligkeitsmatrix verfeinert, rot 64 — Helligkeitsmatix Beleuchtungsmodul 48 — Verfeinerung mit Optikmodell (Monokanal) 50 — Helligkeitsmatrix verfeinert, mono 52

## Figur 8

Farbnormierung Rot / Mono

Abstand Z[mm] / Zeilenposition X[mm]

# Figur 9

## Farbnormierung Blau / Mono

Abstand Z[mm]

Zeilenposition X[mm]

# Figur 10

| Abstand: 1600mm | Abstand: 2000mm | Abstand: 3200mm | Abstand: 3900mm |

Rohbild · Rohbild · Rohbild · Rohbild

Normiert · Normiert · Normiert · Normiert

Durchschnitt · Durchschnitt · Durchschnitt · Durchschnitt

Zeilenposition X · Zeilenposition X · Zeilenposition X · Zeilenposition X

# Figur 11

| Abstand: 1600mm | Abstand: 2000mm | Abstand: 3200mm | Abstand: 3900mm |
|---|---|---|---|
| Rohbild | Rohbild | Rohbild | Rohbild |
| Normiert | Normiert | Normiert | Normiert |
| Durchschnitt | Durchschnitt | Durchschnitt | Durchschnitt |
| Zeilenposition X | Zeilenposition X | Zeilenposition X | Zeilenposition X |

# Figur 12

| Abstand: 1600mm | Abstand: 2000mm | Abstand: 3200mm | Abstand: 3900mm |
|---|---|---|---|
| Rohbild | Rohbild | Rohbild | Rohbild |
| Normiert | Normiert | Normiert | Normiert |
| Durchschnitt | Durchschnitt | Durchschnitt | Durchschnitt |
| Zeilenposition X | Zeilenposition X | Zeilenposition X | Zeilenposition X |

Figur 13

Figur 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015116568 A1
- EP 3012778 A2
- US 20100316291 A1
- US 20120002066 A1
- DE 202019106363 U1
- DE 10200652 A1